# EUROPEAN PATENT APPLICATION

(11) **EP 2 018 950 A1**
(43) Date of publication of application: **28.01.2009**
(21) Application number: 07765829.2
(22) Date of filing: 23.04.2007
(51) Int. Cl.: B29C 53/26, B29C 70/30, B29D 31/00

(54) **METHOD AND APPARATUS FOR PRODUCING SOLID PROFILES FROM A STRIP OF RESIN-PREIMPREGNATED FIBRE**

(30) Priority: 25.04.2006 ES 200601048
(71) Applicant: SERRA SOLDADURA, SA, 08040 Barcelona (ES)
(72) Inventor: FELIP, Blai, E-08040 Barcelona (ES)
(74) Representative: Gislon, Gabriele
(86) International application number: PCT/ES2007/000241
(87) International publication number: WO 2007/122275

(57) **Abstract**

The method comprises the steps of: providing a planar strip (10) of fiber preimpregnated with resin which has a longitudinal direction and a transverse direction; corrugating the planar strip (10) to form a corrugated strip (11) with a plurality of zigzag folds parallel to said longitudinal direction; and compacting said corrugated strip (11) in said transverse direction in order to place in contact and to join, one to the other, surfaces of said plurality of folds in order to form a solid profile (12). The apparatus includes: a corrugating unit with a pair of corrugating rollers provided with matching circular striations suitable for corrugating said planar strip (10); and a compacting unit that comprises at least one pair of facing, lateral rollers suitable for compacting said corrugated strip (11) laterally until said solid profile (12) is obtained.

## Description

### Technical Field

The present invention generally relates to a method and to an apparatus for producing rigid solid profiles from a strip of fiber preimpregnated with resin, and more specifically, from a strip of carbon fiber preimpregnated with resin. The rigid solid profiles obtained can be applied, for example, in building structures in the aeronautics industry.

### State of the Prior Art

Obtaining rigid structural profiles from strips of fiber preimpregnated with resin that are superimposed, laminated and subsequently shaped through various processes to give them the desired shape is known in the state of the art. Several materials in the form of a strip of fiber preimpregnated with resin stored on a reel are available on the market. The fiber can be, for example, carbon fiber and the resin a heat-setting resin, for which the strips are supplied on reels at a low temperature, for example, around -16°C. Given that the supplied laminar strips are thin, in order to obtain relatively thick pieces several individual laminar strips are superimposed and laminated. Each strip of fiber preimpregnated with resin, as it is supplied, has at least one of its faces protected by means of a protective layer, for example paper. To superimpose and laminate several strips of fiber preimpregnated with resin it is necessary to previously remove the respective protective layers, applying at least one layer of adhesive to each laminar strip, and subsequently superimposing and pressing the strips, one to the other, passing them through one or more pairs of pressure rollers to obtain a planar strip with the desired thickness.

Patent US-A-4114775 discloses a bar for a shuttleless loom obtained from several strips of fiber preimpregnated with resin superimposed and laminated to obtain a strip with a desired thickness which is subsequently shaped by molding to obtain a corrugated lamina. This corrugated lamina is joined by means of adhesives to a planar strip to obtain a reinforced and yet light-weight bar because of the empty gaps existing between the folds of the corrugated strip.

Patent application US 2002/0011540 discloses a structure forming a leading edge of a support surface of an airplane. The structure comprises structural elements and panels obtained by laminating strips of fiber preimpregnated with resin.

The technique of laminating strips of fiber preimpregnated with resin is suitable for obtaining planar parts or relatively thin parts, or parts including corrugated strips or structures in the form of a honeycomb. However, such a technique is unsuitable for obtaining parts in the form of a bar or solid profile since the commercial laminar strips used as starting material are very thin in relation to the width. It would be necessary to laminate a large number of relatively narrow strips to obtain said part in the form of a bar or solid profile by laminating, which is unfeasible in practice.

### Disclosure of the Invention

According to a first aspect, the present invention contributes to overcome the foregoing and other drawbacks by providing a method for producing solid profiles from a strip of fiber preimpregnated with resin. The method comprises the steps of providing a planar strip of fiber preimpregnated with resin, said planar strip having a longitudinal direction and a transverse direction; corrugating the planar strip to form a corrugated strip with a plurality of zigzag folds parallel to said longitudinal direction; and compacting said corrugated strip in said transverse direction in order to place in contact and to join, one to the other, surfaces of said plurality of folds in order to form a solid profile.

The operation of compacting the corrugated strip optionally comprises a pultrusion or extrusion operation using a variable pitch die to give said solid profile a variable cross section. Said initial planar strip can be made up of a single layer, although it is preferred to prepare said planar strip by means of a laminating operation comprising superimposing and joining, one to the other, a plurality of laminar strips of fiber preimpregnated with resin to obtain a planar strip with a desired thickness.

According to a second aspect, the present invention provides an apparatus for producing solid profiles from a strip of fiber preimpregnated with resin. The apparatus includes a corrugating unit comprising at least one pair of facing corrugating rollers provided with matching circular striations, or a pair of facing corrugating combs provided with matching teeth, or a combination thereof, suitable for corrugating a planar strip of fiber preimpregnated with resin to form a corrugated strip with a plurality of zigzag folds parallel to a longitudinal direction of the same; and a compacting unit comprising at least one pair of facing, lateral rollers suitable for compacting laterally said corrugated strip until placing in contact and joining, one to the other, surfaces of said folds to thereby obtain a solid profile.

Said compacting unit includes a die comprising said pair of lateral rollers, and said die is optionally a variable pitch die including guide means and drive means for moving at least one member of the pair of lateral rollers in relation to the other member during a pultrusion or extrusion operation for producing variations in the cross section of the solid profile along the longitudinal direction of the same. Even though said initial planar strip can be made up of a single layer, the apparatus preferably includes a strip preparing unit comprising a plurality of unwinding and conditioning devices suitable for unwinding a plurality of laminar strips of fiber preimpregnated with resin from respective supply reels and for conditioning said laminar strips for laminating. Said strip preparing unit also comprises one or more laminating devices suitable for superimposing, pressing and joining, one to the other, said plurality of laminar strips to thereby prepare said planar strip.

The unwinding, conditioning and laminating operations are essentially performed by means of known devices. However, the apparatus of the present invention includes a first longitudinal cutting device suitable for cutting longitudinally some of the laminar strips to reduce their width before being laminated with the others and at least one transverse cutting device for cutting one or more of the laminar strips to a predetermined length before said strips reach a final laminating device suitable for superimposing and laminating these laminar strips of a predetermined length together with the rest of the continuous laminar strips to form the planar strip. The strips of a predetermined length can include some or all of the strips with a reduced width. This makes the planar strip have a different number of superimposed layers, and accordingly, thickness variations in different areas, in both the longitudinal and transverse directions.

With the method and/or with the apparatus of the present invention, it is possible to produce solid profiles with a continuous or variable cross section from one or more strips of fiber preimpregnated with resin, for example, commercially available strips of carbon fiber preimpregnated with resin. The solid profiles thus obtained can be applied, for example, in the aeronautics industry to complement structural profiles of fiber preimpregnated with resin having relatively thin walls obtained by other techniques or to fill empty gaps between such profiles in airplane structures.

### Brief Description of the Drawings

The foregoing and other advantages and features will be better understood based on the following detailed description of exemplary embodiments with reference to the attached drawings, in which:
Figure 1 is a cross-sectional diagram showing several steps of a method for producing solid profiles from a strip of fiber preimpregnated with resin according to a first aspect of the present invention;
Figures 2 and 3 are side elevational diagrams showing units of an apparatus for producing solid profiles from a strip of fiber preimpregnated with resin according to a second aspect of the present invention, in which the units shown in Figure 3 are after the units shown in Figure 1 in the direction of the arrows;
Figure 4 is a schematic side elevational view of an unwinding and conditioning device of the apparatus of Figures 2 and 3;
Figure 5 is a schematic perspective view showing the construction of a transverse cutting unit according to an embodiment of the apparatus of Figures 2 and 3;
Figure 6 is a schematic perspective view showing the construction of a corrugating unit of the apparatus of Figures 2 and 3;
Figure 7 is a schematic perspective view showing the construction of a compacting unit according to an embodiment of the apparatus of Figures 2 and 3;
Figure 8 is a schematic perspective view showing the construction of a compacting unit according to another embodiment of the apparatus of Figures 2 and 3;
Figure 9 is a cross-sectional view schematically showing a possible assembly of the compacting unit of Figure 8;
Figure 10 is a plan view of the compacting unit of Figure 9; and
Figure 11 is a schematic perspective view showing an example of a solid profile obtainable by the method and/or apparatus of the present invention.

### Detailed Description of Exemplary Embodiments

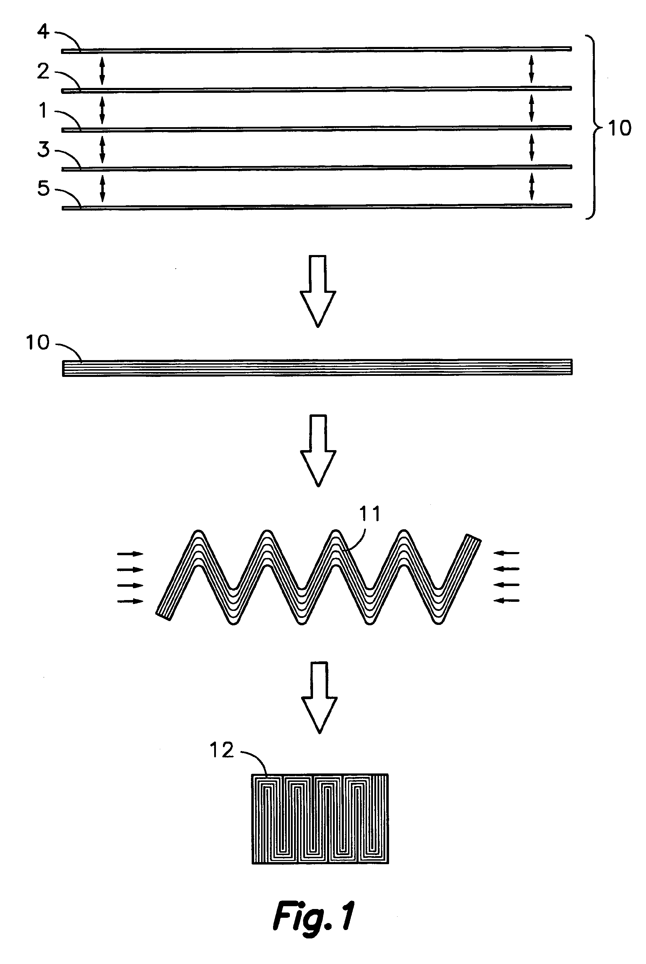

Referring first to Figure 1, the method for producing solid profiles from a strip of fiber preimpregnated with resin according to the present invention essentially comprises the following steps. First, a planar strip 10 of fiber preimpregnated with resin is provided. In the embodiment shown, this planar strip 10 has previously been prepared by means of a laminating operation comprising superimposing and joining, one to the other, a plurality of laminar strips 1, 2, 3, 4, 5 of fiber preimpregnated with resin. However, for the purpose of the present invention, the planar strip could be made up of a single layer. In any case, the planar strip 10 has a longitudinal direction and a transverse direction, its section in the transverse direction being shown in Figure 1. Then, the method comprises corrugating the planar strip 10 to form a corrugated strip 11 with a plurality of zigzag folds parallel to the longitudinal direction. Finally, the method of the invention comprises compacting said corrugated strip 11 in the transverse direction in order to place in contact and to join, one to the other, surfaces of said plurality of folds in order to form a solid profile 12. The mentioned step of compacting the corrugated strip 11 optionally comprises a pultrusion or extrusion operation using a variable pitch die to give said solid profile 12 a variable cross section.

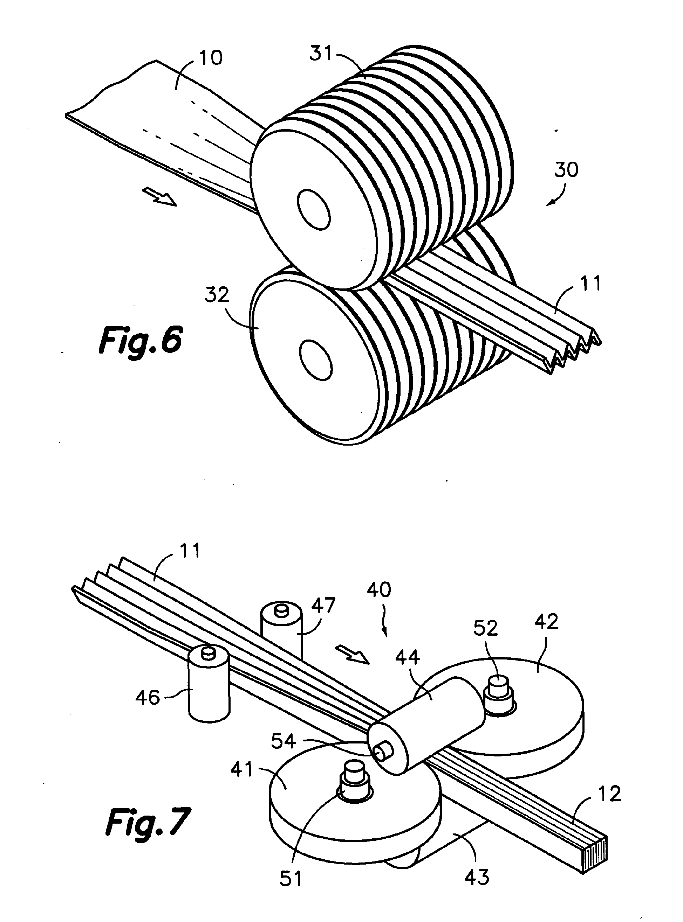

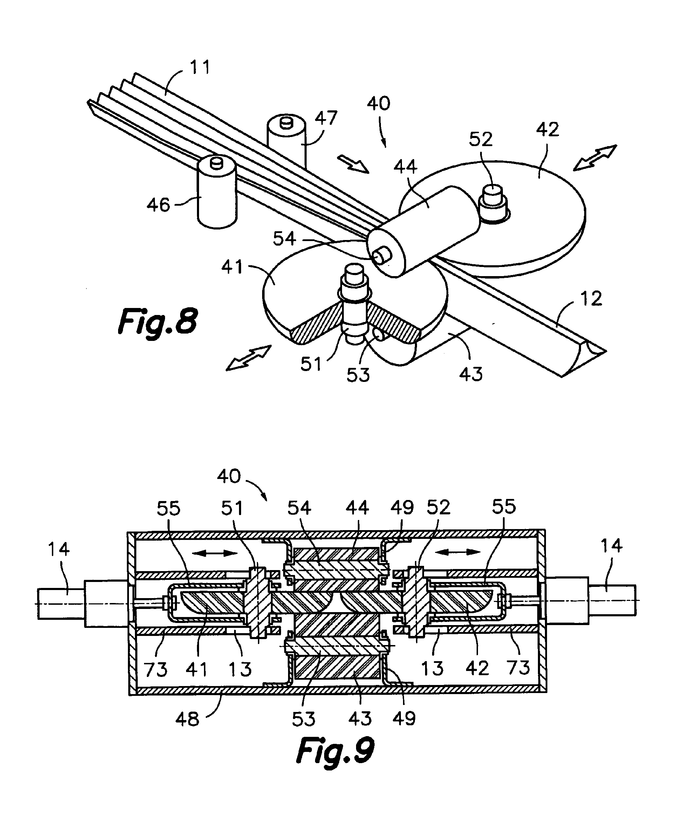

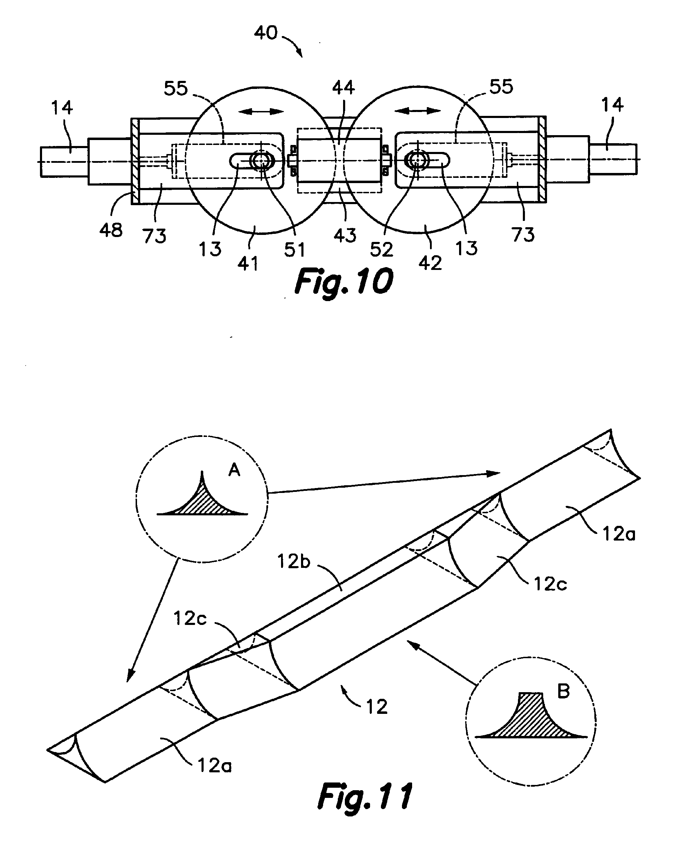

In the example of Figure 1, the solid profile 12 has a rectangular cross section, which could be obtained, for example, by means of a die made up of two pairs of parallel rollers arranged orthogonally, such as that schematically described below in relation to Figure 7. By providing said rollers with shaped work surfaces, as is schematically described below in relation to Figures 8 to 10, the cross section conferred to solid profile 12 can have another cross section that is not rectangular. An example of a solid profile 12 which can be obtained by the method of the present invention is described below in relation to Figure 11.

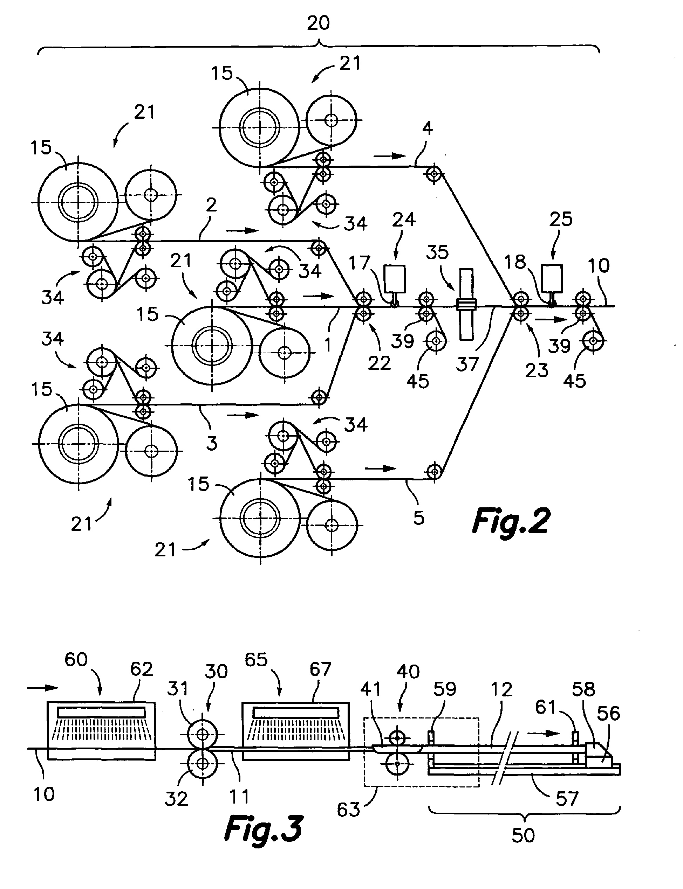

An apparatus for producing solid profiles from a strip of fiber preimpregnated with resin according to an embodiment of the present invention, which is suitable for applying the method of the present invention, is described below with reference to Figures 2 and 3. The apparatus includes a strip preparing unit 20 (shown in Figure 2), as well as a corrugating unit 30, a compacting unit 40, a pulling unit 50 and heating units 60, 65 (shown in Figure 3). All the mentioned units are suitable for producing solid profiles 12 by means of line processes.

Said strip preparing unit 20 comprises a plurality of unwinding and conditioning devices 21 suitable for unwinding a plurality of laminar strips 1, 2, 3, 4, 5 of fiber preimpregnated with resin from respective supply reels 15. The embodiment shown in Figures 2 and 3 shows five unwinding and conditioning devices 21 for five laminar strips 1, 2, 3, 4, 5, although the number and arrangement of the same may vary depending on the applications. All the mentioned unwinding and conditioning devices 21 are substantially the same. Each of the unwinding and conditioning devices 21 comprises a support for one of said supply reels 15 carrying the laminar strips 1, 2, 3, 4, 5, which can typically be a commercially available type. The mentioned supports for the supply reels 15 include means (not shown) for controlling the tension of the laminar strips for the purpose of eliminating rotational inertias of the supply reels 15 in stops. The supplied laminar strips 1, 2, 3, 4, 5 must be conditioned for a subsequent laminating operation.

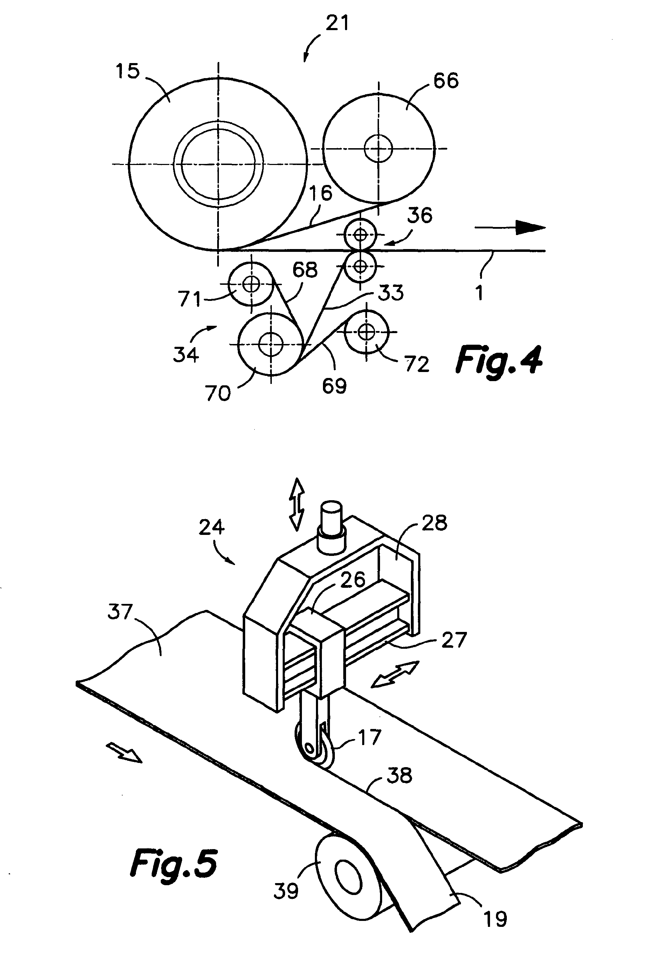

To that end, as is best shown in Figure 4, each unwinding and conditioning device 21 comprises means for separating a protective layer 16, for example in the form of a strip of paper, from the corresponding laminar strip 1, 2, 3, 4, 5, and taking it up on a reel 66. Once the strip of paper 16 has been removed, it is necessary to apply at least one layer of adhesive 33 to each laminar strip 1, 2, 3, 4, 5 by means of an adhesive applicator 34 associated to each unwinding and conditioning device 21. The layer of adhesive 33 is in the form of an adhesive strip covered on both faces with respective protective layers 68, 69 and supplied in reels 70. The adhesive applicator comprises a support for the adhesive strip reel 70 and means for removing the two protective layers 68, 69 of the layer of adhesive 33 and taking them up on respective reels 71, 72 before the layer of adhesive 33 is applied to the corresponding laminar strip 1, 2, 3, 4, 5. Each unwinding and conditioning device 21 includes a pair of pressure rollers 36 for applying and pressing the layer of adhesive 33 on a face of the laminar strip 1, 2, 3, 4, 5.

The method of the invention comprises superimposing, pressing and joining, one to the other, the plurality of previously conditioned laminar strips 1, 2, 3, 4, 5. To that end, the apparatus shown in the embodiment of Figures 2 and 3 comprises a first laminating device 22 arranged for performing a prior laminating of some of the laminar strips 1, 2, 3 and a final laminating device 23 arranged for performing a final laminating of the other laminar strips 4, 5 with the laminar strips 1, 2, 3 previously laminated to obtain the planar strip 10, although the number and arrangement of the laminating devices may vary depending on the applications. Figure 2 shows the laminar strip resulting from the prior lamination of some of the laminar strips 1, 2, 3 by means of reference number 37.

The method of the invention envisages cutting longitudinally and/or transversely one or more of the laminar strips 1, 2, 3, 4, 5 before the mentioned final laminating step. To that end, the strip preparing unit 20 shown in Figure 2 includes a first longitudinal cutting device 24, which is shown in further detail in Figure 5. The mentioned first longitudinal cutting device 24 comprises a blade 17 assembled in a support 26 which is movable along a transverse guide 27. Drive means (not shown) are connected to said support 26 and controlled for moving said blade 17 in the direction transverse to the laminar strip 37 resulting from the prior lamination to a transverse position according to a selected width for the laminar strip 37. The transverse guide 26 is in turn assembled in a frame 28 which is movable in guide means (not shown). Drive means (not shown) are connected to said frame 28 and controlled for moving said blade 17 in a direction normal to the laminar strip 37 for inserting said blade 17 in the laminar strip 37. A movement of the laminar strip 37 when the blade 17 is inserted therein causes a longitudinal cut 38 in the laminar strip 37. An excess portion 19 of the laminar strip 37 is removed, being re-routed by means of a support roller 39 and being taken up in a reel 45. A longitudinal cutting device similar to the one described can obviously be applied to only one of the laminar strips 1, 2, 3, 4, 5 or to a laminar strip resulting from a different prior lamination combination, or there can even be several longitudinal cutting devices applied individually to several of the laminar strips 1, 2, 3, 4, 5.

The strip preparing unit 20 shown in Figure 2 further includes a transverse cutting device 35 for cutting transversely one or more of the laminar strips 1, 2, 3, 4, 5 before the mentioned final laminating device 23. In the embodiment shown, said transverse cutting device 35 acts to transversely cut said laminar strip 37 resulting from the prior lamination of some of the laminar strips 1, 2, 3, which has been previously cut longitudinally by means of the first longitudinal cutting device 24, such that the laminar strip 37 is supplied to the final laminating device 23 in the form of discontinuous sections with a selected width which will be laminated together with the other laminar strips 4, 5, which are continuous, for producing the planar strip 10. The transverse cutting device 35 can be a conventional device, for example, a guillotine cutter; therefore its detailed description will be omitted. The transverse cutting device 35 can obviously be applied to only one of the laminar strips 1, 2, 3, 4, 5 or to a laminar strip resulting from a different prior lamination combination, or there can even be several transverse cutting devices applied individually to several of the laminar strips 1, 2, 3, 4, 5.

The strip preparing unit 20 can optionally include a second longitudinal cutting device 25 arranged for cutting the planar strip 10 longitudinally with a blade 18 according to a selected width and removing an excess portion of the same before said operation of corrugating the initial planar strip 10. This second longitudinal cutting device 25 can be similar to the one shown in Figure 5, with said blade 18 assembled in a support movable along a transverse guide by drive means, and with said transverse guide assembled in a frame movable buy drive means in a direction normal to the planar strip 10 for inserting the blade 18 in the planar strip 10. With this arrangement, the strip preparing unit 20 is able to prepare a planar strip 10 in which there is a different number of superimposed layers, and accordingly, thickness variations, in different areas of the same, in both the longitudinal and transverse directions, suited to the features of a solid profile 12 with a variable cross section to be obtained.

The apparatus of the present invention shown in Figures 2 and 3 is suitable for supplying the planar strip 10 thus prepared to a corrugating unit 30 schematically shown in Figure 3 and separately in Figure 6. In the embodiment shown, said corrugating unit 30 comprises a pair of mutually facing corrugating rollers 31, 32 provided with circular striations in their surface. The striations of both corrugating rollers 31, 32 are matching such that the prominent parts of the striations of one of the rollers penetrate the depressed parts of the striations of the other roller. The planar strip 10 is passed between the nip of both corrugating rollers 31, 32 resulting in the transformation of the planar strip 10 into a corrugated strip 11 provided with a plurality of zigzag folds parallel to the longitudinal direction of the planar strip 10. The pair of corrugating rollers 31, 32 can alternatively be substituted by a pair of facing corrugating combs provided with matching teeth, or a combination of a striated roller and a comb, or another device that can readily occur to a person skilled in the art with an equivalent result. The size and shape of the striations or teeth will be in accordance with the number and the shape of the folds to be obtained in the corrugated strip 11, and the latter depending on the cross section of the solid profile 12 to be obtained as an end result.

The method of the present invention comprises a first heating step to heat the planar strip 10 coming from the strip preparing unit 20 to a temperature of approximately 45°C to 60°C immediately before entering said corrugating unit 30. To that end, the apparatus of the invention comprises a first heating device 60 arranged between the strip preparing unit 20 and the corrugating unit 30. The apparatus further comprises a second heating device 65 arranged to heat the corrugated strip 11 coming from the corrugating unit 30 immediately before entering a subsequent compacting unit 40 for carrying out a second heating step comprising heating the corrugated strip 11 to a temperature of approximately 45°C to 60°C immediately before performing the mentioned step of compacting the corrugated strip 11 for obtaining the solid profile 12. The heating devices 60, 65 preferably comprise, for example, infrared radiation lamps installed in respective enclosures 62, 67 through which the planar strip 10 and the corrugated strip 11 pass, respectively.

Figure 7 shows an embodiment of said compacting unit 40 preferably comprising a die formed by at least one pair of facing, lateral rollers 41, 42 suitable for compacting said corrugated strip 11 laterally in the transverse direction of the same until placing in contact and joining, one to the other, surfaces of said folds to thereby obtain the solid profile 12. The mentioned lateral rollers 41, 42 of the die are assembled on respective mutually parallel shafts 51, 52 and the top and bottom rollers 43, 44 are assembled on respective mutually parallel shafts 53, 54, parallel to the transverse direction of the corrugated strip 11 and orthogonal to the shafts 51, 52 of the lateral rollers 41, 42. The pair of lateral rollers 41, 42 has respective work surfaces configured to shape respective lateral surfaces of the solid profile 12, and the pair of top and bottom rollers 43, 44 has respective work surfaces configured to shape corresponding top and bottom surfaces of the solid profile 12. The compacting unit optionally comprises one or more pairs of guide rollers 46, 47 for guiding the planar strip 10 before entering said die. In the example of Figure 7, both the work surfaces of the lateral rollers 41, 42 and the work surfaces of the top and bottom rollers 43, 44 are cylindrical, whereby the solid profile 12 obtained has a rectangular cross section. Given that the positions of the shafts of the rollers making up the die are fixed in the example of Figure 7, the rectangular cross section of the solid profile 12 is uniform.

In relation to Figures 8 to 10 is described below another embodiment of the compacting unit 40 comprising a pair of guide rollers 46, 47 and a variable pitch die formed by a pair of lateral rollers 41, 42 assembled on respective, mutually parallel shafts 51, 52 and a pair of top and bottom rollers 43, 44 assembled on respective, mutually parallel shafts 53, 54, parallel to the transverse direction of the corrugated strip 11 and orthogonal to the mentioned shafts sol, 52 of the lateral rollers 41, 42. In this embodiment of Figures 8 to 10, the lateral rollers 41, 42 comprise contoured work surfaces for the purpose of producing a solid profile 12 with a cross section that is not rectangular. The variable pitch die of the compacting unit 40 is further suitable for conferring to solid profile a variable cross section along the longitudinal direction of the same, according to the method of the present invention.

As shown in the construction example shown in Figures 7 and 8, the variable pitch die comprises a base structure 48 in which there are fixed first supports 49 suitable for supporting the mentioned shafts 53, 54 of the top and bottom rollers 43, 44 in fixed positions in relation to the base structure 48. Also fixed to the base structure 48 there are second supports 73 including guide means 13, such as elongated holes, suitable for guiding movements of the shafts 51, 52 of the lateral rollers 41, 42 in directions perpendicular to said shafts 51, 52 and parallel to the transverse direction of the corrugated strip 11. Drive means 14, for example in the form of a pair of linear actuators 14 with a precision leadscrew, are mechanically connected for moving yokes 55 supporting the shafts 51, 52 of the lateral rollers 41, 42. With this construction, the drive means 14 can be driven to move in a controlled manner a member of the pair of lateral rollers 41, 42 in relation to the other, or both lateral rollers 41, 42 at the same time, during a pultrusion or extrusion operation while the top and bottom rollers 43, 44 remain in fixed positions for the purpose of producing variations in the cross section of the solid profile 12 along the longitudinal direction of the same. Other alternative constructions will readily occur to a person skilled in the art for moving the lateral rollers 41, 42 without departing from the scope of the present invention.

Again in relation to Figure 3, the apparatus includes a pulling unit 50 comprising a carriage 56 arranged to be moved along guide means 57. There is assembled on said carriage 56 a gripping device 58, such as a clamp, suitable for gripping a front end of the solid profile 12. Drive means (not shown) are arranged for moving the carriage 56 and said gripping device 58 along said guide means 57 to thereby pull on the solid profile 12 gripped by the gripping device 58 and dragging it along at least the mentioned corrugating and compacting units 30, 40. The apparatus includes a transverse cutting device 59 arranged at the outlet of the compacting unit 40. This transverse cutting device 59 is suitable for sectioning the solid profile 12 and thereby providing a back end to a finished solid profile 12 and a front end to the next solid profile 12. The pulling unit 50 optionally has associated thereto another transverse cutting device 61 arranged close to the final end of the guide means 57 for sectioning the solid profile 12 and thereby scrapping a front portion of the profile that may possibly have been damaged by the clamp of the gripping device 58 and providing a new front end to the finished solid profile 12.

The compacting unit 40 and a first section of the pulling unit 50 are optionally installed inside an enclosure 63 (shown schematically by means of dotted lines in Figure 3) through which the corrugated strip 11 converted into the solid profile 12 passes. The purpose of this enclosure 63 is to preserve the heat accumulated by the corrugated strip 11 and the solid profile 12 in the preceding steps before their curing has finished at room temperature along the rest of the pulling unit 50.

Figure 11 shows an example of a solid profile 12 which can generally be obtained by the method and/or apparatus of the present invention, and more particularly by using the die described above in relation to Figures 8 to 10. The solid profile of Figure 11 has two end portions 12a the cross section of which is shown in the enlarged detail A, a middle portion 12b the cross section of which is shown in the enlarged detail B, and two transition portions 12c located between said end portions 12a and said middle portion 12b. The contour of the cross section A of the end portions 12a is similar to an isosceles triangle that has a straight side at the base and two other concave-curved sides. This cross section A is obtained by arranging the two lateral rollers 41, 42 such that their respective work surfaces are very close to one another. The concave-curved sides of the cross section A of the solid profile 12 are the print of the convex-curved contour of the cross section of the work surface of the lateral rollers 41, 42.

The contour of the cross section B of the portion media 12b is similar to an isosceles trapezoid that has straight major and minor bases and the two other sides are concave-curved, similar to the concave-curved sides of cross section A. The middle portion 12b is obtained by arranging one of the lateral rollers 41 such that its work surface is at a selected distance from the work surface of the other lateral roller 42. The contour of the cross section of the transition portions 12c progressively varies between the contour of cross section A and the contour of cross section B, and is obtained by separating one of the lateral rollers 41 from the other lateral roller 42 or bringing such rollers closer together while the corrugated strip 11 is moved through the die for obtaining the solid profile 12. Solid profiles having a variety of configurations can obviously be obtained by means of lateral rollers 41, 42 with different work surface shapes and with other combinations of the movement of one or both of the lateral rollers 41, 42. Solid profiles 12 with a variable cross section of virtually any length, suitable, for example, for being included in the wings or fuselage of an airplane, can further be produced with the apparatus of the present invention by arranging guide means 57 with a suitable length in the pulling unit.

A person skilled in the art will be able to introduce variations and modifications in the embodiments shown and described without departing from the scope of the present invention as it is defined in the attached claims.

## Claims

1. A method for producing solid profiles from a strip of fiber preimpregnated with resin, comprising the steps of:
providing a planar strip (10) of fiber preimpregnated with resin, said planar strip (10) having a longitudinal direction and a transverse direction;
corrugating the planar strip (10) to form a corrugated strip (11) with a plurality of zigzag folds parallel to said longitudinal direction; and
compacting said corrugated strip (11) in said transverse direction in order to place in contact and to join, one to the other, surfaces of said plurality of folds in order to form a solid profile (12).

2. The method according to claim 1, **characterized in that** said step of compacting comprises a pultrusion or extrusion operation using a variable pitch die to give said solid profile (12) a variable cross section.

3. The method according to claim 1 or 2, **characterized in that** it comprises preparing said planar strip (10) including a laminating operation comprising superimposing and joining, one to the other, a plurality of laminar strips (1, 2, 3, 4, 5) of fiber preimpregnated with resin.

4. The method according to claim 1, **characterized in that** it comprises a first heating step to heat the planar strip (10) to a temperature of approximately 45°C to 60°C immediately before performing said step of corrugating the planar strip (10).

5. The method according to claim 1, **characterized in that** it comprises a second heating step to heat the corrugated strip (11) to a temperature of approximately 45°C to 60°C immediately before performing said step of compacting the corrugated strip (11).

6. The method according to claim 5, **characterized in that** it comprises pulling on a front end of said solid profile (12) in order to drag it along an apparatus suitable for the mentioned steps of preparing and shaping the planar strip (10) and compacting the corrugated strip (11) until the solid profile (12) is obtained in line processes.

7. The method according to claim 3, **characterized in that** the mentioned step of preparing the planar strip (10) comprises unwinding each of said plurality of laminar strips (1, 2, 3, 4, 5) from a respective supply reel (15) and conditioning it as a step prior to said laminating operation.

8. The method according to claim 6, **characterized in that** said step of conditioning the laminar strips (1, 2, 3, 4, 5) comprises removing at least one protective layer (16) from each laminar strip (1, 2, 3, 4, 5) and applying at least one layer of adhesive to each laminar strip (1, 2, 3, 4, 5).

9. The method according to claim 8, **characterized in that** said prior step of unwinding and conditioning the laminar strips (1, 2, 3, 4, 5) comprises cutting one or more of the laminar strips (1, 2, 3, 4, 5) longitudinally and removing an excess portion of the same.

10. The method according to claim 9, **characterized in that** said operation of cutting one or more of the laminar strips (1, 2, 3, 4, 5) longitudinally comprises moving a blade (17) in a direction transverse to the laminar strip according to a selected width for the laminar strip (1, 2, 3, 4, 5), and inserting said blade (17) in the laminar strip while the laminar strip is moved in its longitudinal direction to thereby obtain a laminar strip (1, 2, 3, 4, 5) having said selected width.

11. The method according to claim 7, **characterized in that** said step of unwinding and conditioning the laminar strips (1, 2, 3, 4, 5) comprises cutting one or more of the laminar strips (1, 2, 3, 4, 5) transversely to supply one or more of the laminar strips (1, 2, 3, 4, 5) in discontinuous sections to be laminated together with one or more of the continuous laminar strips (1, 2, 3, 4, 5).

12. The method according to claim 4, **characterized in that** it comprises cutting the planar strip (10) longitudinally and removing an excess portion of the same before said operation of heating the initial planar strip (10).

13. The method according to claim 12, **characterized in that** said operation of cutting the planar strip (10) longitudinally comprises moving a blade (18) in a direction transverse to the planar strip according to a selected width for the planar strip (10), and inserting said blade (18) in the planar strip while the planar strip is moved in its longitudinal direction to thereby obtain a planar strip (10) having said selected width.

14. An apparatus for producing solid profiles from a strip of fiber preimpregnated with resin, including:
a corrugating unit (30) comprising at least one pair of facing corrugating rollers (31, 32), provided with matching circular striations, or one pair of facing corrugating combs provided with matching teeth, or a combination thereof, suitable for corrugating a planar strip (10) of fiber preimpregnated with resin to form a corrugated strip (11) with a plurality of zigzag folds parallel to a longitudinal direction of the same; and
a compacting unit (40) comprising at least one pair of facing, lateral rollers (41, 42), suitable for compacting said corrugated strip (11) laterally until placing in contact and joining, one to the other, surfaces of said folds to thereby obtain a solid profile (12).

15. The apparatus according to claim 14, **characterized in that** it includes a strip preparing unit (20) comprising;
a plurality of unwinding and conditioning devices (21) suitable for unwinding a plurality of laminar strips (1, 2, 3, 4, 5) of fiber preimpregnated with resin from respective supply reels (15) and conditioning said laminar strips (1, 2, 3, 4, 5) for laminating; and
at least one laminating device (22, 23) suitable for superimposing, pressing and joining, one to the other, said plurality of laminar strips (1, 2, 3, 4, 5) to thereby prepare said planar strip (10).

16. The apparatus according to claim 15, **characterized in that** said strip preparing unit (20) includes at least a first longitudinal cutting device (24) comprising a blade (17) assembled in a support (26) movable along a transverse guide (27) by drive means, said transverse guide (27) being assembled in a frame (28) movable by drive means in a direction normal to one of the laminar strips or to a laminar strip (37) resulting from a prior lamination of several of said laminar strips (1, 2, 3) for inserting said blade (17) in the laminar strip (37).

17. The apparatus according to claim 15, **characterized in that** said strip preparing unit (20) includes a second longitudinal cutting device (25) comprising a blade (18) assembled in a support movable along a transverse guide by drive means, said transverse guide being assembled in a frame movable by drive means in a direction normal to the planar strip (10) for inserting said blade (18) in the planar strip (10).

18. The apparatus according to claim 15, **characterized in that** said strip preparing unit (20) includes at least one transverse cutting device (35) for cutting one or more of said laminar strips or a laminar strip (37) resulting from a prior lamination of several of said laminar strips (1, 2, 3) before a final laminating device (23) arranged for laminating the set of laminar strips (1, 2, 3, 4, 5) in the form of the planar strip (10).

19. The apparatus according to claim 14, **characterized in that** it includes a pulling unit (50) comprising a carriage (56) arranged to be moved along guide means (57), a gripping device (58) assembled on said carriage (56) and suitable for gripping a front end of the solid profile (12), and drive means for moving the carriage (56) and said gripping device (58) along said guide means (57) to thereby pull on the solid profile (12) gripped by the gripping device (58) and dragging it along at least the mentioned corrugating and compacting units (30, 40).

20. The apparatus according to claim 15, **characterized in that** it includes a first heating device (60) arranged to heat the planar strip (10) coming from the strip preparing unit (20) immediately before entering the corrugating unit (30), and a second heating device (65) arranged to heat the corrugated strip (11) coming from the corrugating unit (30) immediately before entering the compacting unit (40).

21. The apparatus according to claim 14, **characterized in that** it includes a transverse cutting device (59) arranged at the outlet of the compacting unit (40) and suitable for sectioning the solid profile (12) and thereby providing a back end to a finished solid profile (12) and a front end to the next solid profile (12).

22. The apparatus according to claim 14, **characterized in that** said compacting unit (40) includes a die comprising said pair of lateral rollers (41, 42), which have respective surfaces configured to shape respective lateral surfaces of the solid profile (12), and at least one pair of top and bottom rollers (43, 44) having surfaces configured to shape top and bottom surfaces of the solid profile (12).

23. The apparatus according to claim 22, **characterized in that** said die of the compacting unit (40) is a variable pitch die including guide means (13) and drive means (14) for moving at least one member of the pair of lateral rollers (41, 42) in relation to the other member during a pultrusion or extrusion operation for producing variations in the cross section of the solid profile (12) along the longitudinal direction of the same.
